# EUROPÄISCHE PATENTSCHRIFT

(11) **EP 0 436 148 B1**
(45) Veröffentlichungstag und Bekanntmachung des Hinweises auf die Patenterteilung: **14.08.1996**
(21) Anmeldenummer: 90123650.5
(22) Anmeldetag: 08.12.1990
(51) Int. Cl.: G01N 27/416

(54) **Elektrochemische Messzelle zum Nachweis von Gaskomponenten in fluiden Medien**
Electrochemical cell for sensing of gaseous components in fluid medias
Capteur électrochimique pour détecter des composants gazeux dans des fluides

(30) Priorität: 16.12.1989 DE 3941554
(43) Veröffentlichungstag der Anmeldung: 10.07.1991
(73) Patentinhaber: DRÄGERWERK AKTIENGESELLSCHAFT, D-23542 Lübeck (DE)
(72) Erfinder: Kiesele, Herbert, Dr., W-2400 Lübeck (DE)

(56) Entgegenhaltungen:
- WO-A-86/06168
- FR-A- 2 270 584
- US-A- 4 029 563

## Beschreibung

Die Erfindung betrifft eine elektrochemische Meßzelle zum Nachweis ausgewählter Gaskomponenten in gasförmigen oder flüssigen Medien, insbesondere von Hydridgasen, mittels mindestens einer Meßelektrode und einer Gegenelektrode in einem wäßrigen Elektrolyten, die in einer Meßkammer aufgenommen sind, welche zur Umgebung hin mit einer für die nachzuweisende Substanz permeablen Membran abgeschlossen ist.

Eine Meßzelle für Hydridgase ist aus der EP-A 239 190 bekanntgeworden. Typische z.B. in der Halbleiterfertigung angewandte Hydridgase sind Diboran, Silan, Phosphin und Arsin.

Bei der bekannten Meßzelle läuft die Reaktion der nachzuweisenden Substanz, dem Hydridgas, an der Oberfläche der Meßelektrode ab. Dazu muß die Substanz von der Gasphase außerhalb der Meßzelle durch den Elektrolyten bis zur Elektrodenoberfläche diffundieren, bevor die Reaktion stattfinden kann, welche zu einem Meßsignal führt.

Wegen der langen Diffusionswege bildet sich auch nur ein geringer Konzentrationsgradient der Nachweissubstanz von der Gasphase bis zur Elektrodenoberfläche aus. Dies führt zu einer geringen Empfindlichkeit, weil die Nachweissubstanz zu lange im Elektrolyt-Vorrat verweilt, bevor sie durch entsprechende Reaktionen abtransportiert wird.

Der heterogene Elektronentransfer an der Elektrodenoberfläche führt im allgemeinen zu einer geringen Selektivität für die zu untersuchenden Hydridgase. Weiterhin kann die Einwirkung von Fremdbestandteilen in der Nachweissubstanz auf der Meßelektrodenoberfläche zu einer frühzeitigen Vergiftung führen. Dadurch wird die Diffusionszeit länger, die Empfindlichkeit nimmt ab, und die Zahl der pro Zeiteinheit durch die Membran diffundierenden und an der Elektrode umgesetzten Moleküle der Nachweissubstanz wird kleiner. Alle diese Nachteile bewirken eine unbefriedigende Langzeitstabilität.

Aus der WO-A-8 606 168 ist ein elektrochemischer Meßfühler bekannt, der einen festen Elektrolyten enthält, welcher aus einer Heteropolysäure besteht. Der Festelektrolyt ist inert gegenüber den Elektrodenmaterialien, so daß ausschließlich Ionentransport (Protonenleitung) innerhalb der Elektrolyten stattfindet. Bei dieser Konfiguration ist keine kurze Ansprechzeit zu erwarten.

Der vorliegenden Erfindung liegt die Aufgabe zugrunde, eine Meßzelle der genannten Art so zu verbessern, daß eine höhere Ansprechgeschwindigkeit, bessere Signalempfindlichkeit und Selektivität gegenüber verschiedenen Hydridgasen erreicht und eine Vergiftung der Elektrodenoberflächen vermieden wird.

Die Lösung der Aufgabe erfolgt dadurch, daß der Elektrolyt einen die Oxidation der nachzuweisenden Substanz katalysierenden Zusatz einer anorganischen Heteropolysäure enthält.

Der Vorteil der Erfindung liegt im wesentlichen darin, daß nunmehr der Katalysator in homogener Lösung eine schnelle und vollständige Oxidation des Hydridgases ermöglicht, ohne daß die Elektrode an diesem chemischen Reaktionsmechanismus beteiligt wird. Der reduzierte Katalysator wird anschließend an der Elektrodenoberfläche wiederum sehr schnell oxidiert und in seinen ursprünglichen Zustand zurückgeführt. Er bleibt also während des Reaktionsablaufes stabil. Durch den Katalysator läuft die Nachweisreaktion als Oxidation nur unter Beteiligung der gelösten anorganischen Polysäure mit dem Hydridgas in der Lösung ab, wobei die eigentliche Meß- oder Arbeitselektrode nur noch einen "elektrischen Kontakt" zur Elektrolytlösung herstellt und regeneriert den Katalysator. Auf diese Weise ist gewissermaßen eine flüssige Elektrode für die Reaktion der Hydridgase geschaffen worden.

Die Reaktion der nachzuweisenden Substanz mit dem gelösten Katalysator erfolgt schon unmittelbar bei Eintritt des Hydridgases in den Elektrolyten, so daß ein hoher Substanzfluß und damit eine hohe Empfindlichkeit erreicht wird.

Da alle an der Reaktion beteiligten Teilprozesse sehr schnell ablaufen, wird eine kurze Ansprechzeit verwirklicht wird.

Da die Elektroden zusätzlich von einer Art Schutzfilm des Katalysators umgeben sind, wird eine Elektrodenvergiftung verhindert. Da weiterhin die anorganischen Heteropolysäuren sehr beständig sind, wird eine hohe Langzeitstabilität erreicht.

Um eine erhöhte Meßempfindlichkeit bezüglich des Nachweises von Silan zu erzielen, ist es vorteilhaft, einen weiteren Zusatz eines Eisensalzes zu dem Heteropolysäure-Katalysator hinzuzufügen.

Die Auswahl von geeignetem Elektrodenmaterial und Elektrolyt richtet sich nach der fachmännischen Kenntnis über die elektrochemische Verträglichkeit der Bestandteile untereinander und nach den Meßanforderungen. Eine besonders geeignete Zusammensetzung für den Elektrolyten ist darin zu sehen, daß 4M Schwefelsäure vorzugsweise mit einem Zusatz von Phosphorwolframsäure als Heteropolysäure gesättigt ist (ca. 5 x 10⁻⁴M ). Als weiterer Zusatz kann vorzugsweise Eisen(III)sulfat hinzugefügt werden, dessen Konzentration bei 10⁻²M

Von besonderem Vorteil ist es, die Meßelektrode und Gegenelektrode aus Gold zu fertigen, um eine große Korrosionsbeständigkeit der Elektroden in bezug auf den Elektrolyten zu erhalten, um die Querempfindlichkeit auf Wasserstoff zu reduzieren und insbesondere die Meßzelle bei einer Elektrodenspannung von Null Volt betreiben zu können. Der Betrieb bei O V ermöglicht eine Lagerung der Meßzelle im Kurzschlußbetrieb, so daß sie bei Bedarf sofort in die Betriebsbereitschaft überführt werden kann. Der Grundstrom wird dabei noch weiter verringert und seine Abhängigkeit von der Umgebungstemperatur ist gleichzeitig kompensiert.

Es hat sich herausgestellt, daß eine elektrochemische Meßzelle der genannten Art hervorragend geeignet ist, sie für den Nachweis von NO₂ (Stickstoffdioxid) einzusetzen. Hierfür sind dieselben guten Eigenschaften wie für die Hydridgasmessung anzuführen.

Außerdem ist es wesentlich, daß das elektrische Meßsignal bei einer NO₂-Messung ein umgekehrtes Vorzeichen aufweist wie dasjenige bei einer Hydridgasmessung, und somit eine gute Möglichkeit gibt, zwischen Hydridgasen und NO₂ zu unterscheiden..

Ein Ausführungsbeispiel der Erfindung wird anhand einer schematischen Zeichnung dargestellt und im folgenden näher erläutert.

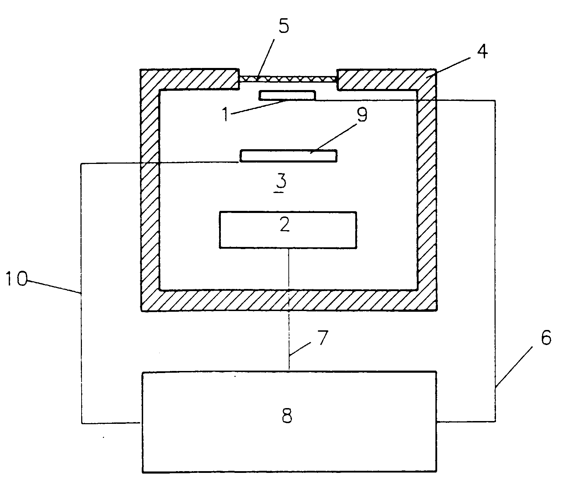

Die einzige Figur zeigt eine Meßzelle mit einer Meßelektrode (1), einer Gegenelektrode (2) und einer Bezugselektrode (9), alle aus Gold, welche in einem Elektrolytraum (3) des Meßzellengehäuses (4) eingebracht sind. Der Elektrolytraum (3) ist mit einer wäßrigen Lösung von 4 M Schwefelsäure, die einen Zusatz von 10⁻² M Eisensulfat enthält und mit Phosphorwolframsäure als Heteropolysäure gesättigt ist, gefüllt. Zur Umgebung hin, die die Meßprobe mit einem Hydridgas enthält, ist der Elektrolytraum (3) durch eine für Hydridgase permeablen Membran (5) abgeschlossen. Die Meßelektrode (1), die Gegenelektrode (2) und die Referenzelektrode (9) besitzen Meßanschlüsse (6, 7, 10), welche durch das Gehäuse (4) hindurchgeführt und an eine Auswerteeinheit (8) zur weiteren Verarbeitung der Meßsignale angeschlossen sind.

## Patentansprüche

1. Elektrochemische Meßzelle zum Nachweis von ausgewählten Gaskomponenten in gasförmigen oder flüssigen Medien, insbesondere von Hydridgasen, mittels mindestens einer Meßelektrode und einer Gegenelektrode in einem wäßrigen Elektrolyten, die in einer Meßkammer aufgenommen sind, welche zur Umgebung hin mit einer für die nachzuweisende Substanz permeablen Membran abgeschlossen ist, dadurch gekennzeichnet, daß der Elektrolyt in gelöster Form mindestens einen die Oxidation der nachzuweisenden Substanz katalysierenden Zusatz einer anorganischen Heteropolysäure enthält.

2. Elektrochemische Meßzelle nach Anspruch 1, dadurch gekennzeichnet, daß der Elektrolyt einen weiteren Zusatz zu der anorganischen Heteropolysäure an Eisensalzen enthält.

3. Elektrochemische Meßzelle nach Anspruch 1 oder 2, dadurch gekennzeichnet, daß als Eisensalz das Eisen(III)sulfat vorgesehen ist.

4. Elektrochemische Meßzelle nach einem der Ansprüche 1 bis 3, dadurch gekennzeichnet, daß die Elektroden (1, 2) aus Gold bestehen.

5. Elektrochemische Meßzelle nach einem der Ansprüche 1 bis 4, dadurch gekennzeichnet, daß eine zusätzliche Referenzelektrode (9) aus Gold vorgesehen ist.

6. Elektrochemische Meßzelle nach einem der Ansprüche 1 bis 5, dadurch gekennzeichnet, daß sie zum Nachweis von NO₂ (Stickstoffdioxid) oder SO₂ (Schwefeldioxid) verwendet wird.

## Claims

1. Electrochemical measuring cell for detecting selected gas components in gaseous or liquid media, in particular for detecting hydride gases, by means of at least one measuring electrode and one counter electrode in an aqueous electrolyte, which measuring electrode and counter electrode are contained in a measurement chamber, which is closed off with respect to the surroundings with a membrane which is permeable for the substance to be detected, characterised in that the electrolyte contains in dissolved form at least one addition of an inorganic heteropoly acid that catalyses the oxidation of the substance to be detected.

2. Electrochemical measuring cell according to claim 1, characterised in that in addition to the inorganic heteropoly acid, the electrolyte contains a further addition of iron salts.

3. Electrochemical measuring cell according to claim 1 or 2, characterised in that iron(III)sulphate is provided as the iron salt.

4. Electrochemical measuring cell according to one of the claims 1 to 3, characterised in that the electrodes (1, 2) are made of gold.

5. Electrochemical measuring cell according to one of the claims 1 to 4, characterised in that there is provided an additional reference electrode (9) which is made of gold.

6. Electrochemical measuring cell according to one of the claims 1 to 5, characterised in that it is used for detecting NO₂ (nitrogen dioxide) or SO₂ (sulphur dioxide).

## Revendications

1. Cellule de mesure électrochimique destinée à déceler des composants gazeux sélectionnés dans des milieux gazeux ou liquides, en particulier des hydrures gazeux, au moyen d'au moins une électrode de mesure et d'une contre-électrode dans un électrolyte aqueux, qui sont contenus dans une chambre de mesure, qui est fermée vers le milieu ambiant avec une membrane perméable à la substance à déceler, caractérisée en ce que l'électrolyte sous forme dissoute contient au moins un additif d'un hétéropolyacide non organique, catalysant l'oxydation de la substance à déceler.

2. Cellule de mesure électrochimique selon la revendication 1, caractérisée en ce que l'électrolyte contient un autre additif en sels de fer, à l'hétéropolyacide non organique.

3. Cellule de mesure électrochimique selon la revendication 1 ou 2, caractérisée en ce que comme sels de fer il est prévu le (III) sulfate de fer.

4. Cellule de mesure électrochimique selon l'une des revendications 1 à 3, caractérisée en ce que les électrodes (1, 2) sont en or.

5. Cellule de mesure électrochimique selon l'une des revendications 1 à 4, caractérisée en ce qu'une électrode de référence (9) supplémentaire en or est prévue.

6. Cellule de mesure électrochimique selon l'une des revendications 1 à 5, caractérisée en ce qu'elle est utilisée pour déceler du NO₂ (dioxyde d'azote) ou SO₂ (dioxyde de soufre).
